# EUROPEAN PATENT APPLICATION

(11) **EP 4 810 662 A1**
(43) Date of publication of application: **23.09.2026**
(21) Application number: 26165690.4
(22) Date of filing: 18.03.2026
(51) Int. Cl.: C25B 1/04, C25B 15/02, H02M 3/155

(54) **WATER ELECTROLYSIS SYSTEM**

(30) Priority: 19.03.2025 JP 2025045989
(71) Applicant: Toyota Jidosha Kabushiki Kaisha, Toyota-shi, Aichi-ken 471-8571 (JP)
(72) Inventor: KITAMURA, Nobuyuki, Toyota-shi, Aichi-ken 471-8571 (JP); NISHIYAMA, Taito, Nagakute-shi, Aichi-ken 480-1192 (JP); SHIGEUCHI, Koji, Nagakute-shi, Aichi-ken 480-1192 (JP); INOUE, Shuntaro, Nagakute-shi, Aichi-ken 480-1192 (JP)
(74) Representative: TBK

(57) **Abstract**

A water electrolysis system includes: a power supply unit; a plurality of parallel circuits connected in parallel to the power supply unit; a plurality of water electrolysis stacks disposed in the parallel circuits, respectively; at least one voltage adjustment unit disposed in at least one of the parallel circuits; and a control device configured to control an operation of the at least one voltage adjustment unit. The control device is configured to control the operation of the at least one voltage adjustment unit such that a difference between currents flowing through the water electrolysis stacks is smaller than the difference when the at least one voltage adjustment unit is not operating.

## Description

### BACKGROUND OF THE INVENTION

### 1. Field of the Invention

The present specification relates to a water electrolysis system.

### 2. Description of Related Art

Japanese Unexamined Patent Application Publication No. 2023-157554 (JP 2023-157554 A) discloses a water electrolysis system including a power supply unit, a plurality of parallel circuits connected in parallel to the power supply unit, a plurality of water electrolysis stacks disposed in the parallel circuits, respectively, and a control device.

### SUMMARY OF THE INVENTION

When a plurality of water electrolysis stacks is connected in parallel to a power supply unit, the voltages of the water electrolysis stacks are equal to each other. The IV characteristics of the water electrolysis stacks differ from each other depending on the degrees of deterioration of the water electrolysis stacks, etc. Therefore, when the water electrolysis stacks are connected in parallel to the power supply unit, the currents flowing through the water electrolysis stacks differ from each other. It is desirable to reduce the difference between the currents flowing through the water electrolysis stacks.

The present specification provides a technology that can reduce a difference between currents flowing through a plurality of water electrolysis stacks.

In a first aspect disclosed in the present specification, a water electrolysis system may include: a power supply unit; a plurality of parallel circuits connected in parallel to the power supply unit; a plurality of water electrolysis stacks disposed in the parallel circuits, respectively; at least one voltage adjustment unit disposed in at least one of the parallel circuits; and a control device configured to control an operation of the at least one voltage adjustment unit. The control device may be configured to control the operation of the at least one voltage adjustment unit such that a difference between currents flowing through the water electrolysis stacks is smaller than the difference when the at least one voltage adjustment unit is not operating.

With the water electrolysis system described above, the control device can change the voltage of the water electrolysis stack disposed in the same parallel circuit where the voltage adjustment unit is disposed. By adjusting the voltage of the water electrolysis stack, the current flowing through the water electrolysis stack is adjusted. Therefore, the control device can control the operation of the at least one voltage adjustment unit such that the difference between the currents flowing through the water electrolysis stacks is smaller than the difference when the at least one voltage adjustment unit is not operating. Thus, it is possible to reduce the difference between the currents flowing through the water electrolysis stacks.

In a second aspect, in the first aspect, the at least one voltage adjustment unit may include a plurality of voltage adjustment units disposed in the parallel circuits, respectively.

With the above configuration, the control device can adjust the voltages of all the water electrolysis stacks. Thus, it is possible to further reduce the difference between the currents flowing through the water electrolysis stacks.

In a third aspect, in the first or second aspect, the water electrolysis system may further include a memory configured to store a reference IV characteristic for the water electrolysis stacks and measured IV characteristics for the respective water electrolysis stacks. The control device may be configured to execute: a process of determining a reference supply voltage based on the reference IV characteristic and a common target current for the water electrolysis stacks; a process of determining, for each of the water electrolysis stacks, a necessary supply voltage to be supplied to the each of the water electrolysis stacks based on the common target current and a corresponding one of the measured IV characteristics; and a process of controlling, for the each of the water electrolysis stacks, an operation of a corresponding one of the voltage adjustment units that is located in the same parallel circuit where the each of the water electrolysis stacks is located based on a difference between the reference supply voltage and the necessary supply voltage.

In the above configuration, the control device controls, for the each of the water electrolysis stacks, the operation of the voltage adjustment unit located in the same parallel circuit where the water electrolysis stack is located based on the difference between the reference supply voltage and the necessary supply voltage. Thus, the current flowing through the each of the water electrolysis stacks can match or approximate the target current.

In a fourth aspect, in the second aspect, the water electrolysis system may further include a plurality of current sensors disposed in the parallel circuits, respectively. The control device may be configured to execute: a process of determining a common target current for the water electrolysis stacks; and a process of controlling, for each of the parallel circuits, an operation of a corresponding one of the voltage adjustment units based on a difference between a detection value from a corresponding one of the current sensors and the common target current.

In the above configuration, the control device controls, for the each of the parallel circuits, the operation of the voltage adjustment unit based on the difference between the detection value from the current sensor and the common target current. Thus, the current flowing through the each of the water electrolysis stacks can match or approximate the target current.

In a fifth aspect, in the first aspect, the water electrolysis system may further include a memory configured to store measured IV characteristics for the respective water electrolysis stacks. The control device may be configured to execute: a process of determining a reference supply voltage based on a common target current for the water electrolysis stacks and the measured IV characteristic for any one of the water electrolysis stacks; a process of determining, for each of the others of the water electrolysis stacks, a necessary supply voltage to be supplied to the each of the others of the water electrolysis stacks based on the common target current and a corresponding one of the measured IV characteristics; and a process of controlling, for the each of the others of the water electrolysis stacks, the operation of the voltage adjustment unit that is located in the same parallel circuit where the each of the others of the water electrolysis stacks is located based on a difference between the reference supply voltage and the necessary supply voltage.

In the above configuration, the control device controls, for the each of the other water electrolysis stacks, the operation of the voltage adjustment unit located in the same parallel circuit where the water electrolysis stack is located based on the difference between the reference supply voltage and the necessary supply voltage. Thus, the current flowing through the each of the water electrolysis stacks can match or approximate the target current.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing an overview of a water electrolysis system 2 according to a first embodiment;
FIG. 2 is a circuit diagram of the water electrolysis system 2 according to the first embodiment;
FIG. 3 is a diagram showing a reference IV characteristic 42 and measured IV characteristics 44A to 44C in a memory 34 of a control device 30 according to the first embodiment;
FIG. 4 is a flowchart of a converter control process to be executed by the control device 30 according to the first embodiment;
FIG. 5 is a diagram showing a reference supply voltage Vt and other values calculated in the converter control process according to the first embodiment;
FIG. 6 is a circuit diagram of a water electrolysis system 202 according to a second embodiment; and
FIG. 7 is a circuit diagram of a water electrolysis system 302 according to a third embodiment.

### DETAILED DESCRIPTION OF EMBODIMENTS

### First Embodiment

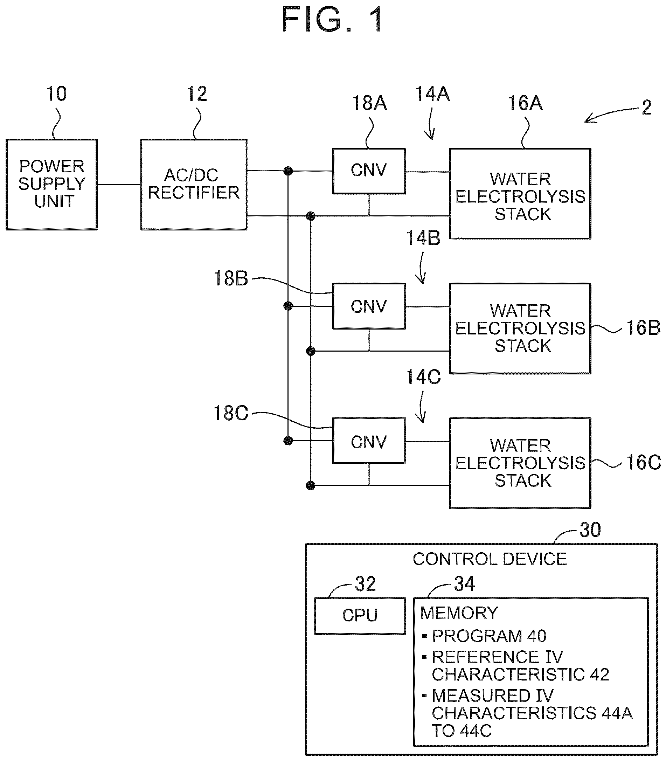

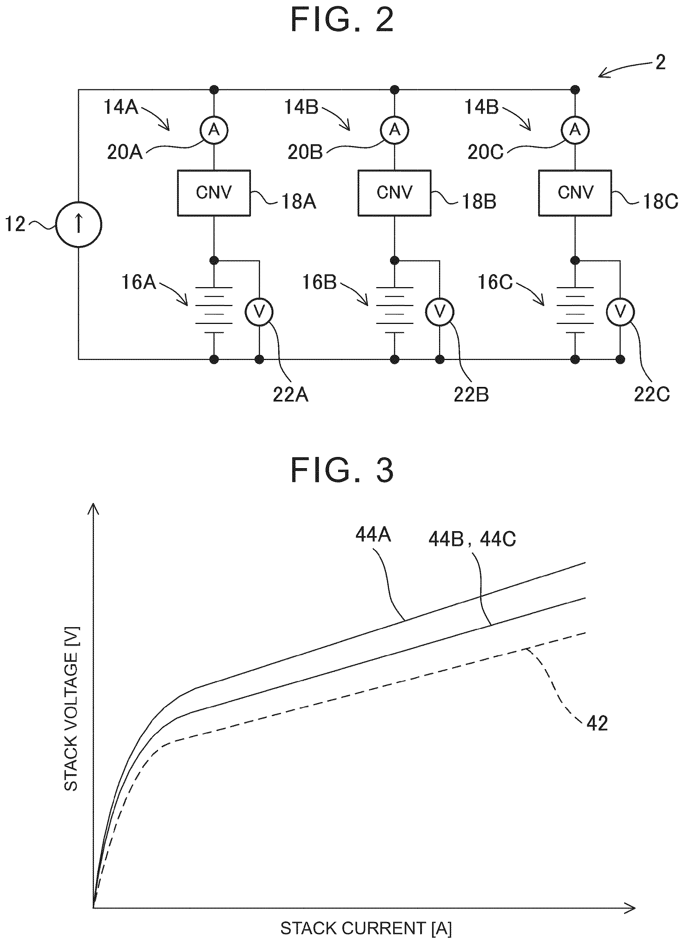

As shown in FIG. 1, a water electrolysis system 2 includes a power supply unit 10, a rectifier 12, a plurality of parallel circuits 14A to 14C, a plurality of water electrolysis stacks 16A to 16C, a plurality of converters 18A to 18C, a plurality of current sensors 20A to 20C (see FIG. 2), a plurality of voltage sensors 22A to 22C (see FIG. 2), and a control device 30. The water electrolysis system 2 is a system that produces hydrogen by electrolyzing water.

The power supply unit 10 supplies alternating current power. For example, the power supply unit 10 is a device that converts commercial power or renewable energy into alternating current power.

One end of the rectifier 12 is connected to the power supply unit 10. The other end of the rectifier 12 is connected to the parallel circuits 14A to 14C. The rectifier 12 converts the alternating current power supplied from the power supply unit 10 into direct current power. The rectifier 12 adjusts electric power to be supplied to the parallel circuits 14A to 14C.

The parallel circuits 14A to 14C are connected in parallel to the rectifier 12.

The water electrolysis stacks 16A to 16C are disposed in the parallel circuits 14A to 14C, respectively. Although illustration is omitted, water is supplied to the water electrolysis stacks 16A to 16C. The water electrolysis stacks 16A to 16C electrolyze the supplied water to produce hydrogen.

The converters 18A to 18C are disposed in the parallel circuits 14A to 14C, respectively. The converters 18A to 18C are connected to the positive electrode sides of the water electrolysis stacks 16A to 16C, respectively. The converters 18A to 18C of the present embodiment are configured to step up the voltages of the water electrolysis stacks in the parallel circuits in which the converters 18A to 18C are disposed. Hereinafter, the current flowing through the water electrolysis stack and the voltage of the water electrolysis stack may be referred to as "stack current" and "stack voltage," respectively. The converters 18A to 18C may be known converters. For example, the converters 18A to 18C are non-resonant, insulated full-bridge converters.

As shown in FIG. 2, the current sensors 20A to 20C are disposed in the parallel circuits 14A to 14C, respectively. The voltage sensors 22A to 22C are disposed in the parallel circuits 14A to 14C, respectively. The voltage sensors 22A to 22C detect the stack voltages of the water electrolysis stacks 16A to 16C, respectively.

As shown in FIG. 1, the control device 30 includes a CPU 32 and a memory 34. The CPU 32 operates according to a program 40 stored in the memory 34. The CPU 32 controls the operations of the rectifier 12 and the converters 18A to 18C. The memory 34 stores a reference IV characteristic 42 and measured IV characteristics 44A to 44C.

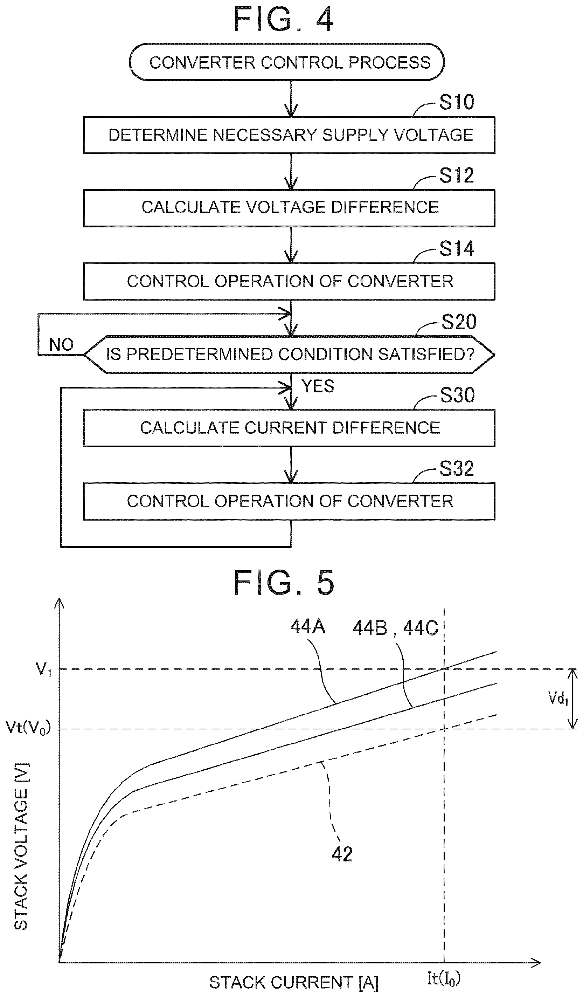

As shown in FIG. 3, the reference IV characteristic 42 and the measured IV characteristics 44A to 44C are each information indicating the correlation between the stack current and the stack voltage. The reference IV characteristic 42 and the measured IV characteristics 44A to 44C are used in a converter control process (see FIG. 4) described later. In general, as the water electrolysis stack deteriorates, the stack voltage increases for the same stack current. That is, when the water electrolysis stack deteriorates, the IV characteristic shifts upward in FIG. 3. The IV characteristics differ from each other depending on the performance of the water electrolysis stack.

The reference IV characteristic 42 in the present embodiment is the IV characteristic of a water electrolysis stack with the highest performance among new water electrolysis stacks. The reference IV characteristic 42 can be registered by a manager of the water electrolysis system 2.

The measured IV characteristics 44A to 44C are IV characteristics corresponding to the water electrolysis stacks 16A to 16C, respectively. The measured IV characteristics 44A to 44C are actually measured information.

### Converter Control Process

Referring to FIG. 4, the converter control process to be executed by the control device 30 will be described. The control device 30 executes the process in FIG. 4 for each of the converters 18A to 18C. In the following example, the process in FIG. 4 is executed for the converter 18A.

Before executing the converter control process, the control device 30 executes a process of determining a common target current It for the water electrolysis stacks 16A to 16C and a process of determining a reference supply voltage Vt. The target current It is determined based on the amount of hydrogen to be produced by the water electrolysis stacks 16A to 16C, etc. The reference supply voltage Vt is determined based on the target current It and the reference IV characteristic 42 (see FIG. 3). The reference supply voltage Vt is the output voltage of the rectifier 12. Specifically, the control device 30 determines a voltage corresponding to the target current It in the reference IV characteristic 42 as the reference supply voltage Vt. For example, as shown in FIG. 5, when the target current It is a current I₀, the reference supply voltage Vt is a voltage V₀. In the following example, the target current It is the current I₀ and the reference supply voltage Vt is the voltage V₀.

In S10 in FIG. 4, the control device 30 determines a necessary supply voltage Vn to be supplied to the water electrolysis stack 16A. The control device 30 determines a voltage V₁ corresponding to the target current It in the measured IV characteristic 44A as the necessary supply voltage Vn.

In S12, the control device 30 calculates a voltage difference Vd₁ between the reference supply voltage Vt and the necessary supply voltage Vn determined in S10.

In S14, the control device 30 controls the operation of the converter 18A connected to the water electrolysis stack 16A using the voltage difference Vd₁ determined in S12. The control device 30 controls the operation of the converter 18A such that the step-up value of the converter 18A reaches the voltage difference Vd₁. For example, the control device 30 determines a control duty for the converter 18A from the voltage difference Vd₁ using PI control. The control device 30 determines the step-up value of the converter 18A using a detection value from the voltage sensor 22A.

In S20, the control device 30 monitors whether a predetermined condition is satisfied. The predetermined condition is, for example, that a predetermined time has elapsed since the process of S12 was executed, or the difference between the step-up value of the converter 18A and the voltage difference Vd₁ is smaller than a predetermined value. When the predetermined condition is satisfied, the control device 30 determines "YES" in S20 and proceeds to S30.

In S30, the control device 30 calculates a current difference between the target current It and a detection value from the current sensor 20A.

In S32, the control device 30 controls the operation of the converter 18A connected to the water electrolysis stack 16A using the current difference determined in S30. The control device 30 controls the operation of the converter 18A such that the current difference approaches zero. For example, the control device 30 determines a control duty for the converter 18A from the current difference using PI control. When S32 ends, the control device 30 returns to S30.

As described above, the converter control process in FIG. 4 is executed for each of the converters 18A to 18C. Therefore, the current flowing through each of the parallel circuits 14A to 14C can match or approximate the target current It.

As described above, the water electrolysis system 2 may include the power supply unit 10, the parallel circuits 14A to 14C connected in parallel to the power supply unit 10, the water electrolysis stacks 16A to 16C disposed in the parallel circuits 14A to 14C, respectively, the converters 18A to 18C ("at least one voltage adjustment unit") disposed in at least one of the parallel circuits 14A to 14C, and the control device 30 that controls the operations of the converters 18A to 18C. The control device 30 controls the operations of the converters 18A to 18C such that the difference between the currents flowing through the water electrolysis stacks 16A to 16C is smaller than the difference when the converters 18A to 18C are not operating.

With the water electrolysis system 2 described above, the control device 30 can change the stack voltage of the water electrolysis stack disposed in the same parallel circuit where the converter is disposed. By adjusting the stack voltage, the current flowing through the water electrolysis stack is adjusted. Therefore, the control device 30 can control the operations of the converters 18A to 18C such that the difference between the currents flowing through the water electrolysis stacks 16A to 16C is smaller than the difference when the converters 18A to 18C are not operating. Thus, it is possible to reduce the difference between the currents flowing through the water electrolysis stacks 16A to 16C.

With the above configuration, the control device 30 can adjust the stack voltages of all the water electrolysis stacks 16A to 16C. Thus, it is possible to further reduce the difference between the currents flowing through the water electrolysis stacks 16A to 16C.

The water electrolysis system 2 further includes the memory 34 that stores the reference IV characteristic 42 for the water electrolysis stacks 16A to 16C and the measured IV characteristics 44A to 44C for the respective water electrolysis stacks 16A to 16C. The control device 30 is configured to execute the process of determining the reference supply voltage Vt based on the reference IV characteristic 42 and the common target current It for the water electrolysis stacks 16A to 16C, the process of determining, for each of the water electrolysis stacks 16A to 16C, the necessary supply voltage Vn to be supplied to the water electrolysis stack based on the common target current It and a corresponding one of the measured IV characteristics 44A to 44C (S10 in FIG. 4), and the process of controlling, for each of the water electrolysis stacks 16A to 16C, the operation of the converter located in the same parallel circuit where the water electrolysis stack is located based on the difference between the reference supply voltage Vt and the necessary supply voltage Vn (S14).

With the above configuration, the current flowing through each of the water electrolysis stacks 16A to 16C can match or approximate the target current It.

The water electrolysis system 2 further includes the current sensors 20A to 20C disposed in the parallel circuits 14A to 14C, respectively. The control device 30 is configured to execute the process of determining the common target current It for the water electrolysis stacks 16A to 16C, and the process of controlling, for each of the parallel circuits, the operation of the converter based on the difference between the detection value from a corresponding one of the current sensors 20A to 20C and the common target current It (S32).

With the above configuration, the current flowing through each of the water electrolysis stacks 16A to 16C can match or approximate the target current It.

### Second Embodiment

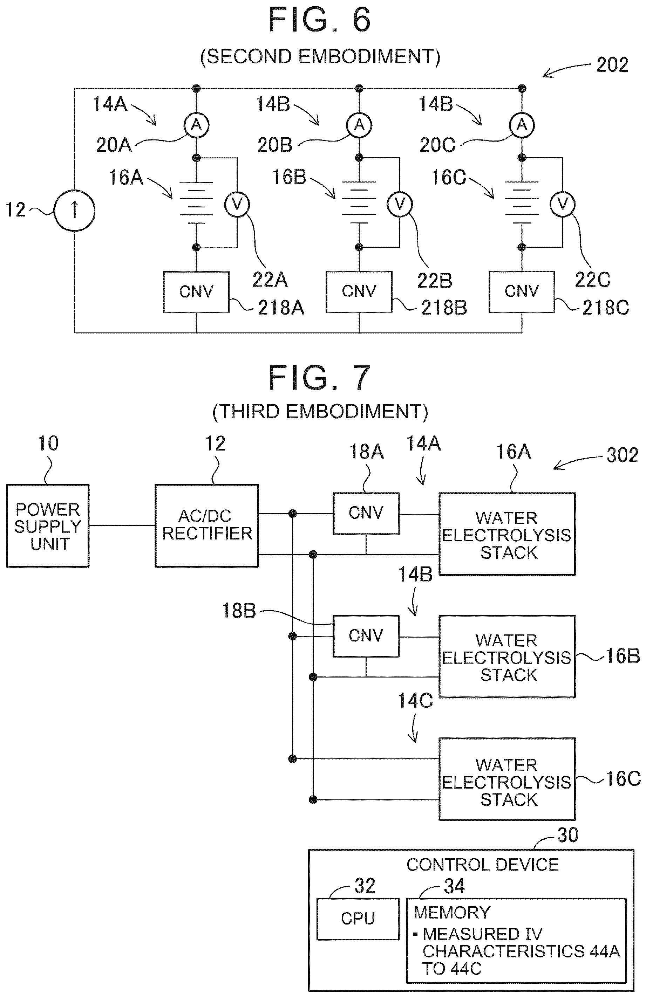

A water electrolysis system 202 according to a second embodiment will be described with reference to FIG. 6. In the following description, the components common to the embodiments will be denoted by the same reference numerals and the description thereof will be omitted.

As shown in FIG. 6, the water electrolysis system 202 according to the second embodiment differs from the water electrolysis system 2 according to the first embodiment in that a plurality of converters 218A to 218C is connected to the negative electrode sides of the water electrolysis stacks 16A to 16C, respectively. With this configuration as well, the current flowing through each of the water electrolysis stacks 16A to 16C can match or approximate the target current It.

### Third Embodiment

A water electrolysis system 302 according to a third embodiment will be described with reference to FIG. 7.

As shown in FIG. 7, in the water electrolysis system 302 according to the third embodiment, no converter is disposed in the parallel circuit 14C. Further, the reference IV characteristic is not stored in the memory 34 of the control device 30.

In the present embodiment, the control device 30 determines the reference supply voltage Vt using the target current It and the measured IV characteristic 44C for the water electrolysis stack 16C in which the stack voltage cannot be adjusted. The control device 30 executes the converter control process in FIG. 4 for each of the water electrolysis stacks 16A, 16B other than the water electrolysis stack 16C.

As described above, the water electrolysis system 302 further includes the memory 34 that stores the measured IV characteristics 44A to 44C for the respective water electrolysis stacks 16A to 16C. The control device 30 is configured to execute the process of determining the reference supply voltage Vt based on the common target current It for the water electrolysis stacks 16A to 16C and the measured IV characteristic 44C for the water electrolysis stack 16C, the process of determining, for each of the water electrolysis stacks 16A, 16B, the necessary supply voltage Vn to be supplied to the water electrolysis stack based on the common target current It and a corresponding one of the measured IV characteristics 44A, 44B (S10 in FIG. 4), and the process of controlling, for each of the water electrolysis stacks 16A, 16B, the operation of the converter located in the same parallel circuit where the water electrolysis stack is located based on the difference between the reference supply voltage Vt and the necessary supply voltage Vn.

With the above configuration, the current flowing through each of the water electrolysis stacks can match or approximate the target current It.

Although the specific examples of the technology disclosed in the present specification have been described in detail above, these are merely examples and do not limit the scope of the claims. The technology described in the claims includes various modifications and alterations of the specific examples given above.

### First Modification

The number of parallel circuits is not limited to three, but may be two, or may be four or more.

### Second Modification

In the water electrolysis system including the parallel circuits, it is sufficient that the converter is provided in at least one of the parallel circuits.

### Third Modification

S10 to S20 in FIG. 4 may be omitted.

### Fourth Modification

In the first and second embodiments, the reference IV characteristic 42 may be omitted. In the present modification, the control device 30 determines the reference supply voltage Vt using the target current It and any one of the measured IV characteristics 44A to 44C. For example, the control device 30 determines the reference supply voltage Vt using the measured IV characteristics 44B, 44C with the highest performance among the measured IV characteristics 44A to 44C. In this case, it is appropriate that the converter 18A be configured to step up the stack voltage. For example, the control device 30 determines the reference supply voltage Vt using the measured IV characteristic 44A with the lowest performance among the measured IV characteristics 44A to 44C. In this case, it is appropriate that the converters 18B, 18C be configured to step up the stack voltages.

### Fifth Modification

In the first and second embodiments, the reference IV characteristic 42 may be omitted. In the present modification, the control device 30 determines the reference supply voltage Vt using the target current It and an average IV characteristic of the measured IV characteristics 44A to 44C. In the present modification, it is appropriate that the converters 18A to 18C be configured to step up the stack voltages and to step down the stack voltages.

### Sixth Modification

In the first to third embodiments etc., the converters 18A to 18C may be configured to step up the stack voltages and to step down the stack voltages.

### Seventh Modification

The converters 18A to 18C may be removably disposed in the parallel circuits 14A to 14C, respectively.

The technical elements described in the present specification or the drawings exhibit technical utility alone or in various combinations, and are not limited to the combinations described in the claims as filed. The technology illustrated in the present specification or the drawings can achieve a plurality of objects simultaneously, and exhibits technical utility by achieving one of these objects.

## Claims

1. A water electrolysis system comprising:
a power supply unit;
a plurality of parallel circuits connected in parallel to the power supply unit;
a plurality of water electrolysis stacks disposed in the parallel circuits, respectively;
at least one voltage adjustment unit disposed in at least one of the parallel circuits; and
a control device configured to control an operation of the at least one voltage adjustment unit, wherein
the control device is configured to control the operation of the at least one voltage adjustment unit such that a difference between currents flowing through the water electrolysis stacks is smaller than the difference when the at least one voltage adjustment unit is not operating.

2. The water electrolysis system according to claim 1, wherein the at least one voltage adjustment unit includes a plurality of voltage adjustment units disposed in the parallel circuits, respectively.

3. The water electrolysis system according to claim 2, further comprising a memory configured to store a reference IV characteristic for the water electrolysis stacks and measured IV characteristics for the respective water electrolysis stacks, wherein
the control device is configured to execute:
a process of determining a reference supply voltage based on the reference IV characteristic and a common target current for the water electrolysis stacks;
a process of determining, for each of the water electrolysis stacks, a necessary supply voltage to be supplied to the each of the water electrolysis stacks based on the common target current and a corresponding one of the measured IV characteristics; and
a process of controlling, for the each of the water electrolysis stacks, an operation of a corresponding one of the voltage adjustment units that is located in the same parallel circuit where the each of the water electrolysis stacks is located based on a difference between the reference supply voltage and the necessary supply voltage.

4. The water electrolysis system according to claim 2, further comprising a plurality of current sensors disposed in the parallel circuits, respectively, wherein
the control device is configured to execute:
a process of determining a common target current for the water electrolysis stacks; and
a process of controlling, for each of the parallel circuits, an operation of a corresponding one of the voltage adjustment units based on a difference between a detection value from a corresponding one of the current sensors and the common target current.

5. The water electrolysis system according to claim 1, further comprising a memory configured to store measured IV characteristics for the respective water electrolysis stacks, wherein
the control device is configured to execute:
a process of determining a reference supply voltage based on a common target current for the water electrolysis stacks and the measured IV characteristic for any one of the water electrolysis stacks;
a process of determining, for each of the others of the water electrolysis stacks, a necessary supply voltage to be supplied to the each of the others of the water electrolysis stacks based on the common target current and a corresponding one of the measured IV characteristics; and
a process of controlling, for the each of the others of the water electrolysis stacks, the operation of the voltage adjustment unit that is located in the same parallel circuit where the each of the others of the water electrolysis stacks is located based on a difference between the reference supply voltage and the necessary supply voltage.
